**Europäisches Patentamt**

**European Patent Office**

**Office européen des brevets**

(19)

(11) Veröffentlichungsnummer: **0 200 158 B1**

(12) ## EUROPÄISCHE PATENTSCHRIFT

(45) Veröffentlichungstag der Patentschrift: **17.06.92**

(21) Anmeldenummer: **86105649.7**

(22) Anmeldetag: **24.04.86**

(51) Int. Cl.5: $B01D\ 61/24$, $F28F\ 9/02$, $A61M\ 1/18$, $F28F\ 21/06$

(54) **Stoff- und/oder Wärmeaustauscher.**

(30) Priorität: **27.04.85 DE 3515279**
**28.09.85 DE 3534618**
**03.10.85 DE 3535386**
**07.04.86 DE 3611621**

(43) Veröffentlichungstag der Anmeldung:
**05.11.86 Patentblatt 86/45**

(45) Bekanntmachung des Hinweises auf die
Patenterteilung:
**17.06.92 Patentblatt 92/25**

(84) Benannte Vertragsstaaten:
**BE DE FR GB IT NL SE**

(56) Entgegenhaltungen:
**EP-A- 0 058 275       EP-A- 0 187 708**
**DE-A- 2 836 007       FR-A- 2 351 040**
**FR-A- 2 374 932       FR-A- 2 405 737**
**FR-A- 2 553 674       JP-A-61 011 110**

(73) Patentinhaber: **Akzo Patente GmbH**
**Postfach 10 01 49 Kasinostrasse 19-23**
**W-5600 Wuppertal-1(DE)**

(72) Erfinder: **Baurmeister, Ulrich, Dr. Dr.-Ing.**
**Moltkestrasse 67**
**W-5600 Wuppertal 1(DE)**
Erfinder: **Sticksel, Werner, Dr. Dr.-Ing.**
**Friedhofstrasse 10**
**W-6453 Seligenstadt(DE)**
Erfinder: **Hoff, Elmar, Dipl.-Ing.**
**Bruchstrasse 38**
**W-4320 Hattingen(DE)**

**Beschreibung**

Die Erfindung betrifft einen Stoff- und/oder Wärmeaustauscher bestehend aus einem Bündel von Hohlfäden von im wesentlichen gleicher Länge, deren Enden in eine Vergußmasse eingebettet sind, einem im wesentlichen zylindrischen Gehäuse mit Anschlußstutzen zur Zu- und Abfuhr mindestens zweier Medien, wobei das erste Medium durch die Hohlfäden hindurch, und das zweite Medium am Strömungsausgang radial nach außen geführt wird, und wobei das Gehäuse aus einem im wesentlichen rohrförmigen Körper und zwei Kappen besteht, die mit den Enden des im wesentlichen rohrförmigen Körpers jeweils zwei voneinander dicht getrennte verteilerräume bilden, von denen der erste stirnseitig und der zweite am Außenmantel des rohrförmigen Körpers angeordnet ist, und der Außenmantel des rohrförmigen Körpers im Bereich des zweiten Verteilerraumes mindestens eine Durchtrittsöffnung aufweist, sowie zum Herstellen des Austauschers geeignete Verfahren.

Aus der FR-A-2 553 674 ist ein Stoffaustauscher bekannt, bei welchem der zweite Verteilerraum zwar auch am Außenmantel angeordnet ist, er wird dort jedoch nicht durch die Kappen, sondern allein durch das Gehäuse gebildet und liegt demzufolge innerhalb des Gehäuses. Er ist dort somit also auch bereits ohne die Kappe vorhanden. Darüberhinaus weist dieser bekannte Stoffaustauscher nur eine einzige Durchtrittsöffnung im rohrförmigen Körper auf, die zudem die Eintrittsöffnung zum zweiten Verteilerraum bildet.

Aufgabe der vorliegenden Erfindung ist es, einen Stoff- und/oder Wärmeaustauscher der eingangs genannten Art zur Verfügung zu stellen, der für den teil- bzw. vollautomatischen Herstellprozeß geeignet ist. Weiterhin sollen möglichst viele Bestandteile des Austauschers wiederverwertbar sein. Bevorzugt sollen die Austauscher einen möglichst geringen Anteil an Vergußmasse enthalten.

Diese Aufgabe wird erfindungsgemäß gelöst durch die kennzeichnenden Merkmale des Anspruchs 1.

Der rohrförmige Körper kann auf diese Weise ohne größere Werkzeugkosten in seinen äußeren Dimensionen verändert werden, da in diesen keine Anschlußstutzen vorgesehen werden müssen.

Im einfachsten Fall genügt eine einzige Durchtrittsöffnung, die dann als direkte Weiterführung des Anschlußstutzens angesehen werden kann. In der Regel werden jedoch mehrere Durchtrittsöffnungen vorgesehen. Sie sollen möglichst nahe an der Vergußmasse angeordnet sein.

Das Hohlfadenbündel kann aus einzelnen oder aus miteinander verbundenen, beispielsweise als Schußfäden verwebten Hohlfäden bestehen. Die Hohlfäden können auch um einen stabilisierenden Kern herum zum Bündel zusammengefaßt sein.

An die Stabilität des rohrförmigen Körpers sind keine besonderen Ansprüche mehr gestellt, d.h. er kann eine besonders dünne Wandung aufweisen oder auch flexibel gestaltet werden.

Die Kappen können (als Einwegartikel) fest mit dem rohrförmigen Körper verbunden sein. Sie können aber auch lösbar angeordnet sein. Sie können dann auch beim Austausch der rohrförmigen Körper weiter verwendet werden; sie können sogar Bestandteil der für die Austauscher vorgesehenen Anlagen sein, wobei dann nur der rohrförmige Körper mit dem Hohlfadenbündel ausgetauscht werden muß.

Besonders günstig ist es hierbei, wenn der zweite Verteilerraum ringförmig um den Außenmantel des rohrförmigen Körpers angeordnet ist, und mehrere Durchtrittsöffnungen am Umfang des Außenmantels vorgesehen sind. Dabei ist es besonders vorteilhaft, wenn durch spezielle Gestaltung des ringförmigen Querschnitts des zweiten Verteilerraums, durch unterschiedliche Querschnittsflächen der Durchtrittsöffnungen und/oder durch spezielle Verteilung der Durchtrittsöffnungen am Umfang des rohrförmigen Körpers erreicht wird, daß die Beaufschlagung mit dem zweiten Medium (Zu- bzw. Abfuhr) des Hohlfadenbündels auf dessen Umfang gleichmäßig erfolgt. Bei unterschiedlichen Querschnittsflächen der Durchtrittsöffnungen kann die größte Öffnung, die naturgemäß gegenüber dem Anschlußstutzen um 180° verdreht angeordnet ist, zum Einbringen der Vergußmasse dienen.

Die Durchtrittsöffnungen werden in der Regel radial durch die Wand des rohrförmigen Körpers hindurchtreten, sie können aber auch bei entsprechender ringförmiger Ausbildung der Rohrwandung axial in den gebildeten Ringkanal eintreten. Es ist auch günstig, wenn die Innenwand der Enden des im wesentlichen rohrförmigen Körpers im Bereich der Vergußmasse eine derart erweiterte Querschnittsfläche aufweist, daß zwischen dem äußeren Umfang des Hohlfadenbündels und der Innenwand des rohrförmigen Körpers ein mit Vergußmasse ausgefüllter, möglichst geringer Zwischenraum vorhanden ist.

Die radiale Abmessung des Zwischenraumes soll bevorzugt zwischen 0,2 und 1,5 mm liegen.

Vorteilhaft ist es, wenn sich der Innenraum des im wesentlichen rohrförmigen Körpers vom einen Endbereich zum anderen Endbereich hin konisch erweitert.

Hierdurch wird vermieden, daß das Hohlfadenbündel beim axialen Einbringen kaum noch beschädigt wird, wenn es gegebenenfalls durch Hilfsmittel, wie z.B. Trichter, in den engsten Teil des rohrförmigen Körpers eingeführt wird. Die Konizität liegt hierbei bei etwa 0,5 bis 1°, gemessen zwischen Wand und Körperachse.

Besonders günstig ist es, wenn die Kappen und der im wesentlichen rohrförmige Körper aus unterschiedlichen Materialien besteht, und das Material des rohrförmigen Körpers nahezu dasselbe Längenänderungsverhalten aufweist wie das Hohlfadenbündel.

Es ist auch möglich, durch konstruktive Gestaltung des Rohrkörpers, beispielsweise in Art eines Faltenbalges das Längenänderungsverhalten zu beeinflussen.

An rohrförmigen Körper können zur besseren Handhabung Aussparungen oder Vorsprünge vorgesehen sein. Ebenso können durch entsprechende Nasen-förmige Vorsprünge bzw. Ausbuchtungen die Zuordnung von Kappe zum rohrförmigen Körper eindeutig festgelegt werden.

Aufgabe der vorliegenden Erfindung ist es darüber hinaus, geeignete Verfahren für die Herstellung des erfindungsgemäßen Stoff- und/oder Wärmeaustauschers zur Verfügung zu stellen, die sich auch in einen vollkontinuierlichen Herstellungsprozeß integrieren lassen und die insbesondere auch die häufig auftretenden Dichtungsprobleme vermeiden.

Gelöst wird diese Aufgabe durch ein Verfahren, bei dem ein Hohlfadenbündel axial in ein Gehäuse eingeführt und mittels einer vergußmasse an beiden Enden abgedichtet wird, das dadurch gekennzeichnet ist, daß ein rohrförmiges Gehäuse, dessen beide Enden möglichst geringfügig erweitert sind, wobei auf die erweiterten Enden des Gehäuses je ein ringförmiger Körper aufgebracht wird, der am freien Ende in seiner Innenabmessung der Außenkontur des Hohlfadenbündels entspricht und von dieser Innenabmessung zunächst auf die Innenkontur des erweiterten Endes des Gehäuses übergeht, verwendet wird, daß die Enden des eingeführten Hohlfadenbündels derart in eine Verguß masse dicht eingebettet werden, daß die Verguß masse den freien Raum im ringförmigen Körper und zumindest teilweise im erweiterten Gehäuseende ausfüllt, daß nach dem Festwerden der Verguß masse der ringförmige Körper entfernt wird und daß dann das überstehende, mit Verguß masse zusammengefaßte Hohlfadenbündelende außerhalb des Gehäuses im Bereich, in dem der Außenquerschnitt der Verguß masse größer ist als der Außenquerschnitt des Hohlfadenbündels, abgeschnitten wird.

Dieses Verfahren hat den Vorteil, daß

- das Ausfransen der Hohlfäden, wie sonst üblich, unterbleibt,
- die Herstellung von Hohlfadenmodulen automatisiert werden kann,
- beim hergestellten Modulteil eine dichte Berührung zwischen Verguß masse und Gehäuseende gewährleistet werden kann,
- eine besonders günstige, in die Oberfläche der Verguß masse integrierte Dichtfläche im Bereich der Erweiterung des Querschnitts der Verguß masse erreicht wird.

Eine andere Lösung der Aufgabe bildet ein Verfahren, bei dem ein Hohlfadenbündel radial in ein Gehäuse eingeführt und mittels Verguß masse an beiden Enden abgedichtet wird, das dadurch gekennzeichnet ist, daß das Hohlfadenbündel in ein flexibles, axial aufgetrenntes, aufgebogenes Rohr eingelegt wird, das Rohr in die gewünschte geschlossene Form gebracht und an der axialen Trennlinie verbunden wird.

Eine weitere Lösung der Aufgabe bildet schließlich ein Verfahren, bei welchem ein Hohlfadenbündel axial in ein Gehäuse eingeführt wird, das dadurch gekennzeichnet ist, daß ein Hohlfadenbündel mit einer zwei- bis vielfachen Länge des Hohlfadenbündels im fertigen Austauscher in ein ebensolanges Mehrfachgehäuse eingeführt wird, das in den als Gehäuseendabschnitten vorgesehenen Bereichen Wanddurchbrüche für die Zu- bzw. Abfuhr von Austauschmedien aufweist, daß das Gehäuse mit dem sich darin befindenden Hohlfadenbündel zu Austauschern gewünschter Länge zertrennt wird und daß die Hohlfadenendabschnitte anschließend in den Bereichen zwischen den Trennstellen und den Wanddurchbrüchen mittels einer Verguß masse abgedichtet werden.

Diese erfindungsgemäßen Verfahren sind auch zum Herstellen von Austauschern geeignet, bei denen nicht alle Anschlußstutzen in den Kappen angeordnet sind, bei denen also beispielsweise in jeder Kappe nur ein Anschlußstutzen angeordnet ist.

Die Erfindung wird anhand der nachfolgenden Figuren näher erläutert.

Es zeigen:

Figur 1 bis 5
besondere Ausgestaltungen der Enden den rohrförmigen Körpers und der Kappe erfindungsgemäßer Stoff- und/oder Wärmeaustauscher,

Figur 6
eine günstige Ausgestaltung der Innenwand des rohrförmigen Körpers,

Figur 7
einen Anwendungsfall für die erfindungsgemäßen Stoff- und/oder Wärmeaustauscher,

Figur 8
in vereinfachter schematischer Darstellungsweise ein zum Herstellen des Austauschers geeignetes Verfahren,

Figur 9 bis 11
in vereinfachter schematischer Darstellungsweise ein weiteres zum Herstellen des Austauschers geeignetes Verfahren,

Figur 12 und 13
in vereinfachter schematischer Darstellungsweise ein weiteres zum Herstellen des Austauschers geeigneten Verfahren,

Figur 14

ein aufklappbares Gehäuse in aufgeklapptem und geschlossenem Zustand,

Figur 15

ein Gehäuse mit einem Schnappverschluß im geschlossenen Zustand,

Figur 16

ein Gehäuse mit Schnappscharnieren,

Figur 17

eine weitere Ausgestaltungsform eines Verschlusses eines aufklappbaren Gehäuses.

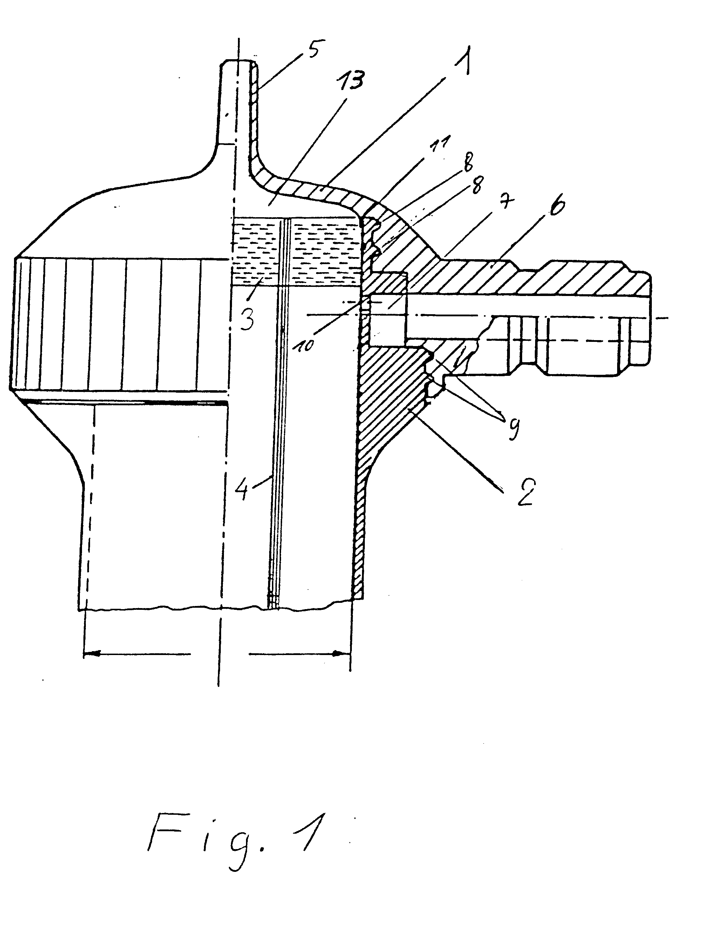

Figur 1 zeigt das eine Ende eines erfindungsgemäßen Stoff- und/oder Wärmeaustauschers. Mit 1 ist die Kappe und mit 2 der in wesentlichen rohrförmige Körper bezeichnet. Vom Hohlfadenbündel sind einzelne Hohfäden 4 als Striche eingezeichnet. Die Enden der Hohlfäden 4 sind in eine Vergußmasse 3 eingebettet. Die Kappe 1 besitzt zwei Anschlußstutzen 5, 6. Der Anschlußstutzen 5 führt in den ersten Verteilerraum 13, der stirnseitig angeordnet ist, während der Anschlußstutzen 6 in den zweiten Verteilerraum 7 führt, welcher von der Kappe 1 und vom Außenmantel des im wesentlichen rohrförmigen Körpers 2 gebildet wird. Die Nasen bzw. Ausbuchtungen 8, 9 können als Schraub- oder Schnapp-Verschluß wirken. Aus dem Verteilerraum 7 führt mindestens eine Durchtrittsöffnung 10 radial in den Innenraum des zylindrischen Körper, wodurch das zweite Medium, welches durch den Anschlußstutzen 6 eingeführt wird, radial nach innen zwischen die einzelnen Hohlfäden 4 geleitet wird. Der Verteilerraum 7 kann als ringförmiger Kanal ausgebildet sein. Der ringförmige Kanal kann auf dem Umfang jeweils gleichen Querschnitt aufweisen, wobei dann die auf dem Umfang verteilten Durchtrittsöffnungen 10 bevorzugt umso größeren Durchmesser aufweisen, je weiter sie vom Anschlußstutzen entfernt sind. Die Durchtrittsöffnungen können auch gleichen Durchmesser aufweisen, wobei der Abstand der einzelnen Durchtrittsöffnungen mit der Entfernung vom Anschlußstutzen 6 immer geringer wird. Die Querschnittsfläche des ringförmigen zweiten Verteilerraumes 7 kann auch mit der Entfernung des Anschlußstutzens 6 immer kleiner werden. Diese Maßnahmen bewirken jeweils allein oder auch in Kombination zweier oder aller drei Maßnahmen, daß das zweite Medium auf den Umfang des Hohlfadenbündels gleichmäßig beaufschlagt werden kann. Wenn das andere Ende des Stoff- oder Wärmeaustauschers in der gleichen Weise gestaltet wird, ist sichergestellt, daß auch die Abfuhr des zweiten Mediums radial nach außen über den Umfang des Hohlfadenbündels gleichmäßig erfolgt.

Zur Abdichtung des ersten Verteilerraumes 13 kann an der Innenseite der Kappe 1 eine umlaufende, spitz ausgebildete Nase 11 vorgesehen sein, die beim Aufsetzen der Kappe 1 in die Vergußmasse 3 eindringt. Dies soll in dem Bereich der Vergußmasse geschehen, in dem keine Hohlfäden mehr angeordnet sind. Es ist deshalb vorgesehen, daß zwischen dem Umfang des Hohlfadenbündels und der Innenwandung des rohrförmigen Körpers 2 ein mit Vergußmasse ausgefüllter geringer Zwischenraum vorhanden ist.

Zur Dichtung des zweiten Verteilerraums nach außen reichen in der Regel die Nasen 9. Die Kappe kann jedoch auch über eine Dichtmasse, einen Dichtring, durch Verkleben, Verschweißen o.ä. dicht auf der Außenwandung des überwiegend rohrförmigen Körpers angeordnet werden.

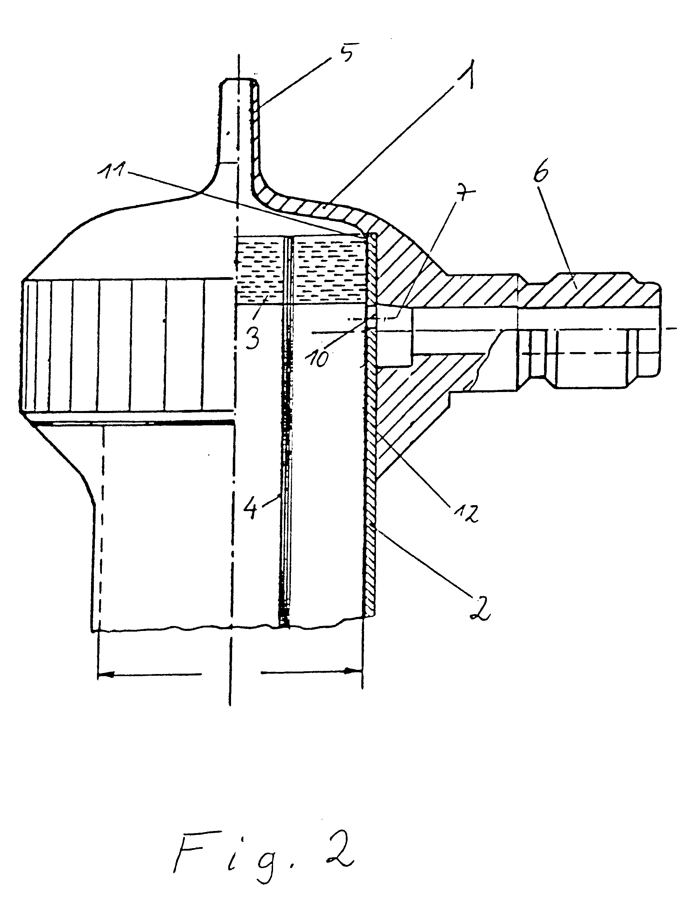

Eine besonders einfache Ausführungsform ergibt sich aus Figur 2, wobei die Kappe 1 dann mit dem rohrförmigen Körper 2 unlösbar verbunden ist. Gleiche Teile wurden in Figur 2 mit derselben Nummerierung versehen, so daß sich eine nochmalige Beschreibung - wie auch in den folgenden Figuren - erübrigt.

In der in Figur 2 dargestellten Ausführungsform kann die Kappe 1 mit dem rohrförmigen Körper 2 im Bereich 12 verklebt, verschweißt usw. werden.

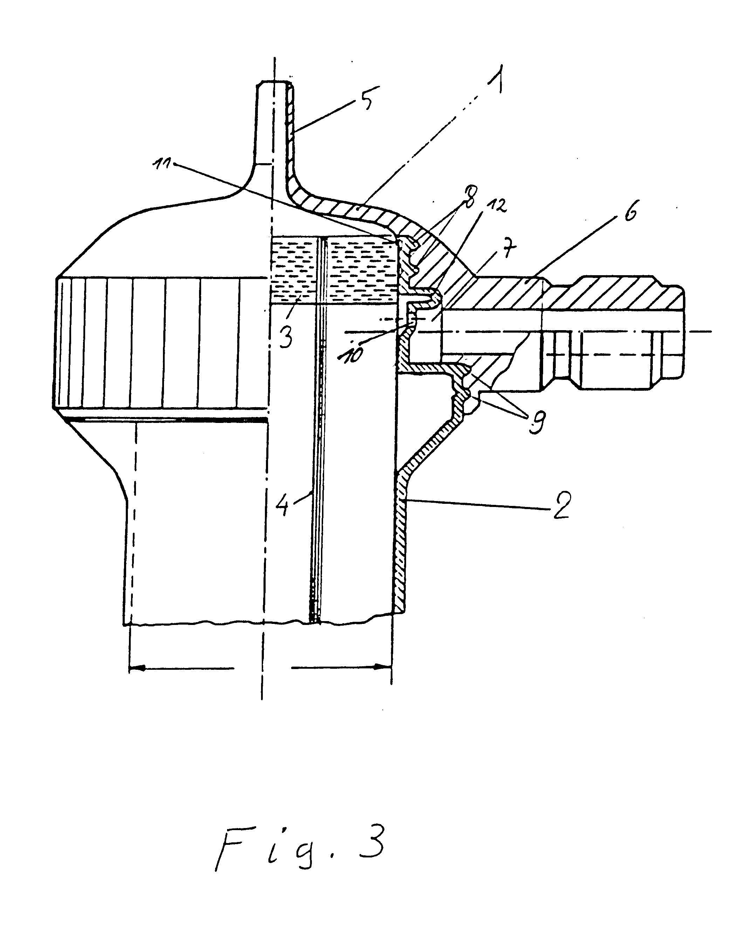

Gemäß Figur 3 zeigt eine weitere Form der Abdichtung zwischen den einzelnen Verteilerräumen 7, 13. Hierbei wird der rohrförmige Körper 2 in Form eines (flexiblen) Balges 12 ausgebildet, welcher nach dem Aufschieben der Kappe und Einschnappen in die Nasen 8 und 9, an die Kappe gepreßt wird, wodurch eine besonders günstige Abdichtung bewirkt wird.

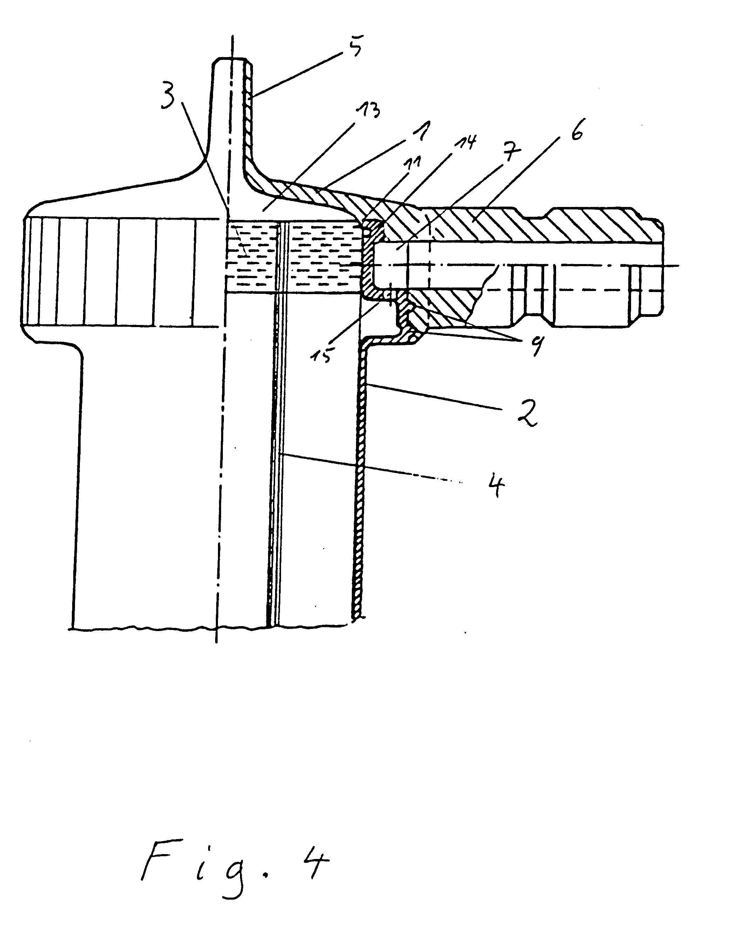

In Figur 4 wird gezeigt, daß die als Faltenbalg 14 ausgebildete Dichtlippe das Ende des rohrförmigen Körpers bilden kann. Weiterhin ist in Figur 4 dargestellt, durch welche Gestaltung des Endbereichs des rohrförmigen Körpers es möglich wird, die Durchtrittsöffnungen 15 axial durch die Wandung treten zu lassen.

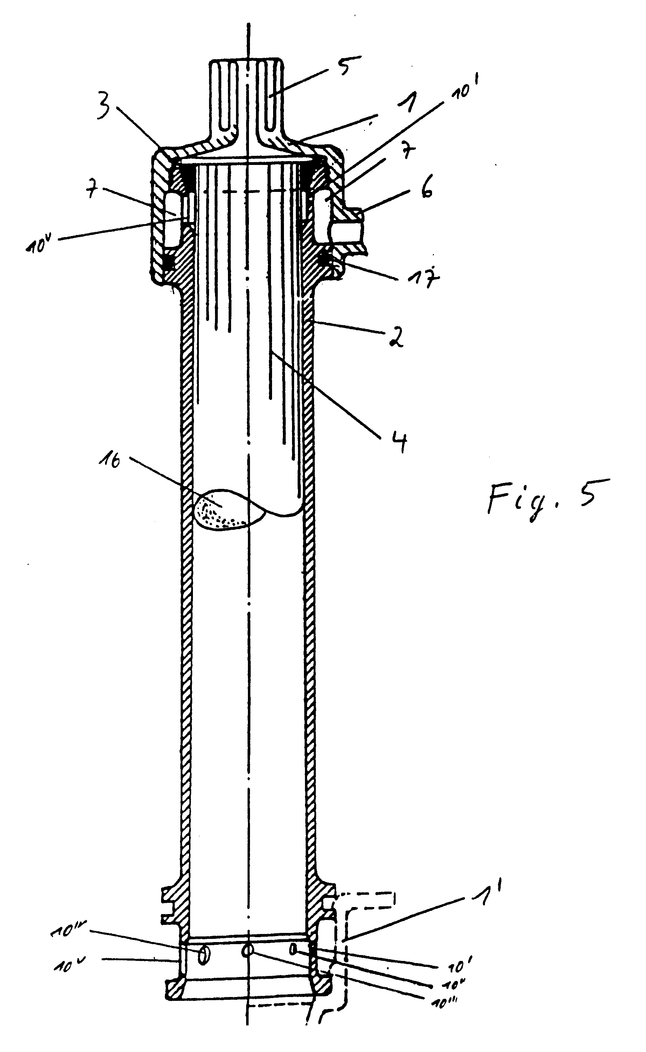

Figur 5 zeigt weitere Möglichkeiten der Ausgestaltung des erfindungsgemäßen Stoff- und/oder Wärmeaustauschers. Die Vergußmasse 3 ist hier in einer konischen Ausgestaltung der Innenwand des rohrförmigen Körpers 2 angeordnet. Der zweite Verteilerraum 7 ist als ringförmiger Kanal ausgebildet. Die Querschnittsflächen der Durchtrittsöffnungen sind unterschiedlich groß, und zwar derart, daß die Querschnittsfläche $10'$, $10''$, $10'''$, $10^{IV}$ und $10^{V}$ mit der Entfernung vom Anschlußstutzen 5 zunimmt. Die Durchtrittsöffnung $10^{V}$ kann bei der Herstellung des erfindungsgemäßen Stoff- und/oder Wärmeaustauschers bei Anwendung von Schleuderguß zum Einbringen der Vergußmasse, beispielsweise Polyurethan, dienen. Das Hohlfadenbündel 16 erstreckt sich in seiner Querschnittsabmessung günstigerweise über den gesamten Innenquerschnitt des rohrförmigen Körpers 2. Die Abdichtung zwischen Kappe und rohrförmigem Körper kann auch durch O-Ringe 17 bewirkt werden. Die Kappe kann auch als Schnappverschluß 1' ausgebildet sein. Diese Ausgestaltungen können einzeln oder in Kombination am erfindungsgemäßen Stoff- und/oder Wärmeaustauscher vorhanden sein.

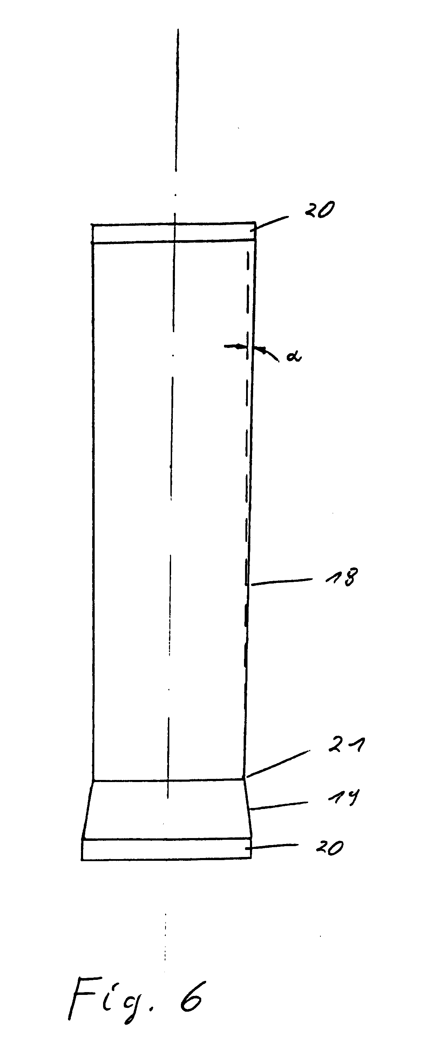

In Figur 6 ist die Gestaltung der Innenwand dargestellt. Im wesentlichen erweitert sich hier der Innenraum 18 vom einen Endbereich 21 bis zum anderen Endbereich 20 konisch. Die Konizität wird festgelegt durch $\alpha$ (etwa 0,5 bis 1°). Eine weitere Konizität 19 im einen Endbereich kann, muß aber nicht vorgesehen sein. Beim Einführen oder Einsaugen des Hohlfadenbündels auf der Seite mit dem geringeren Querschnitt (19/21) kann beispielsweise ein Trichter aufgesetzt werden. Durch die konische Erweiterung des Innenraums wird wirksam verhindert, daß die außenliegenden Hohlfäden des Hohlfadenbündels an der Wand des rohrförmigen Körpers entlang mit dieser in Berührung gelangen und dabei geknickt werden. Die Endstücke 20 sind geringfügig erweitert zur Aufnahme der Vergußmasse.

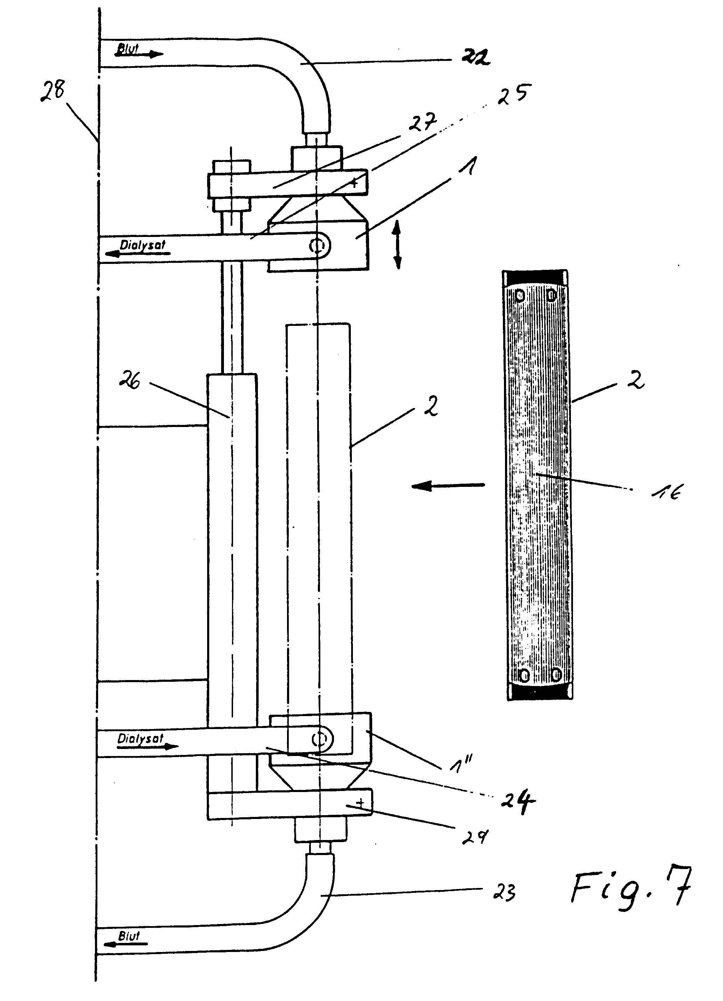

In Figur 7 wird ein besonders günstiger Anwendungsfall der erfindungsgemäßen Stoff- und/oder Wärmeaustauscher dargestellt. Die Austauscher werden hier beispielsweise in eine Dialyseanlage eingesetzt, die in der Figur nicht mehr dargestellt ist und neben der Trennungslinie 28 angeordnet ist. Zu dieser Anlage gehören auch die Anschlußschläuche (-rohre) 22, 23, 24, 25 für Blutzulauf (22), Blutablauf (23), Dialysatzulauf (24) und Dialysatablauf (25) sowie ein Pneumatikzylinder 26, über dessen Halter 27, 29 die Kappen 1, 1" mit dem Pneumatikzylinder eine Einheit bilden. Die Kappen des erfindungsgemäßen Austauschers sind somit Bestandteil der Dialyseanlage. Nur der rohrförmige Körper 2 mit dem Hohlfadenbündel 16 dient als Wegwerfartikel. Die Kappe 1" ist über den Halter 29 ortsfest angeordnet, während die Kappe 1 über den Pneumatikzylinder 26 axial bewegbar angeordnet ist.

Bei Auswechseln der Patrone (rohrförmiger Körper 2 mit Hohlfadenbündel 16) wird der Pneumatikzylinder auseinandergefahren, die Patrone gewechselt und dann der Pneumatikzylinder wieder zusammengefahren.

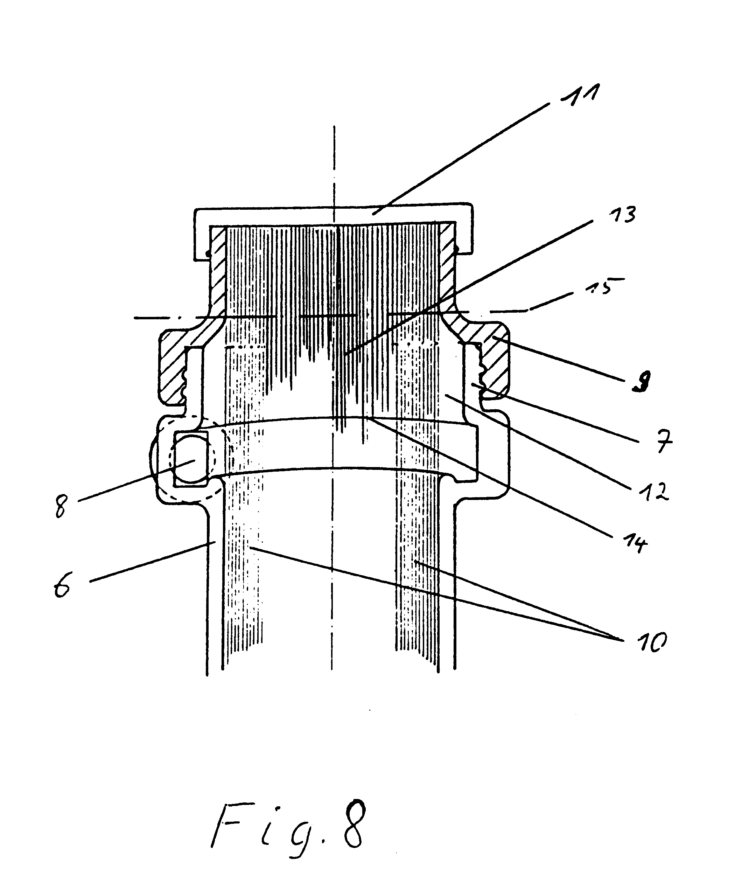

An Figur 8 kann das verfahren gemäß Anspruch 7 beispielsweise erläutert werden. Hierbei ist lediglich ein Gehäuseende 6 dargestellt, welches am Ende 7 geringfügig erweitert ist. Zwischen Gehäuseerweiterung 7 und Gehäuse 6 ist ein Zubzw. Ablauf 8 angeordnet, der beispielsweise im Gehäuse als Spirale ausgebildet ist. Auf das erweiterte Gehäuseende 7 ist ein ringförmiger Körper 9 aufgesteckt bzw. aufgeschraubt, welcher sich an seinem freien Ende bis auf den gewünschten Hohlfadenbündelquerschnitt verjüngt.

Im dargestellten Beispiel soll das Hohlfadenbündel 10 mittels Schleuderguß 12 eingebettet werden. Hierzu muß der ringförmige Körper 9 mit einer Kappe 11 flüssigkeitsdicht verschlossen werden. Die vergußmasse 12 kann über den Zulauf 8 eingeführt werden. Es kann soviel Vergußmasse 12 eingefüllt werden, bis die Vergußmasse 12 den Zwischenraum 13 bis zur Linie 14 ausfüllt. Nach dem Festwerden der Vergußmasse 12 kann der ringförmige Körper 9 mit der Kappe 11 abgenommen werden. Darauf wird das vergossene Bündel im Bereich der Erweiterung beispielsweise entlang Linie 15 abgeschnitten.

Zur Einführung des Hohlfadenbündels in das mit dem ringförmigen Körper 9 versehene Gehäuse 6 kann im Gehäuse 6 ein Unterdruck erzeugt werden, wodurch das Hohlfadenbündel in das Gehäuse eingesaugt wird. Sofern in den einzelnen Hohlfäden herstellungsbedingt noch Flüssigkeit enthalten ist, kann diese durch den Unterdruck ebenfalls aus den Hohlfäden abgesaugt werden.

In die Vergußmasse können Schikanen, beispielsweise Strömungswiderstände, zusätzlich eingebaut werden, die beim späteren Betreiben des Modules die über den Zu- bzw. Ablauf fließende Flüssigkeit bis zur Kontur der Vergußmasse (Linie 14) wirksam hinführen.

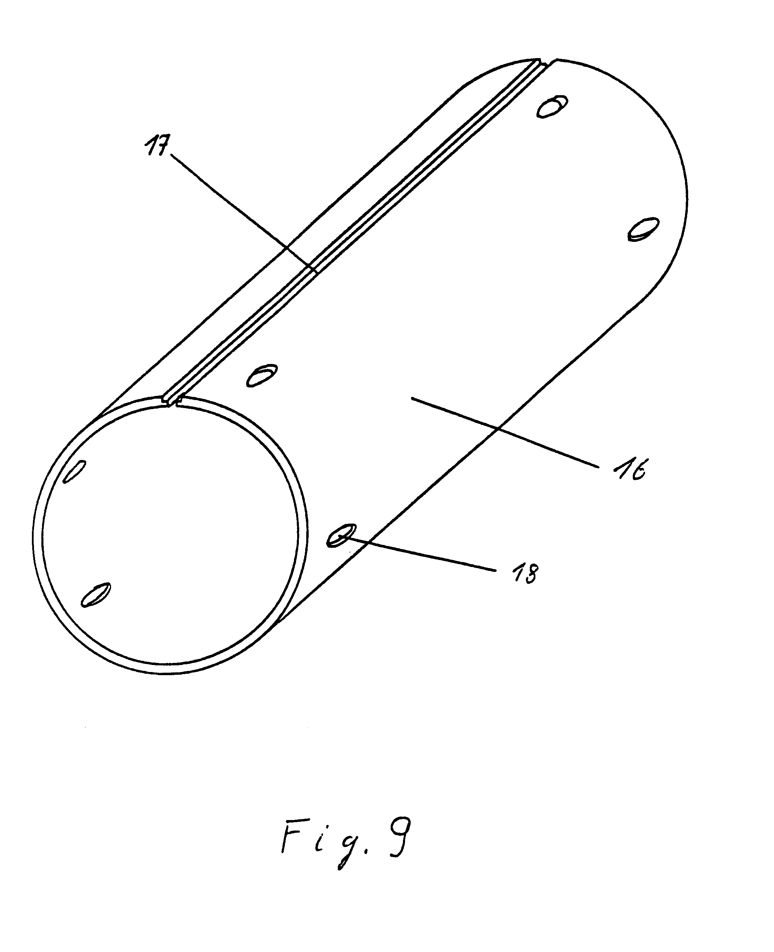

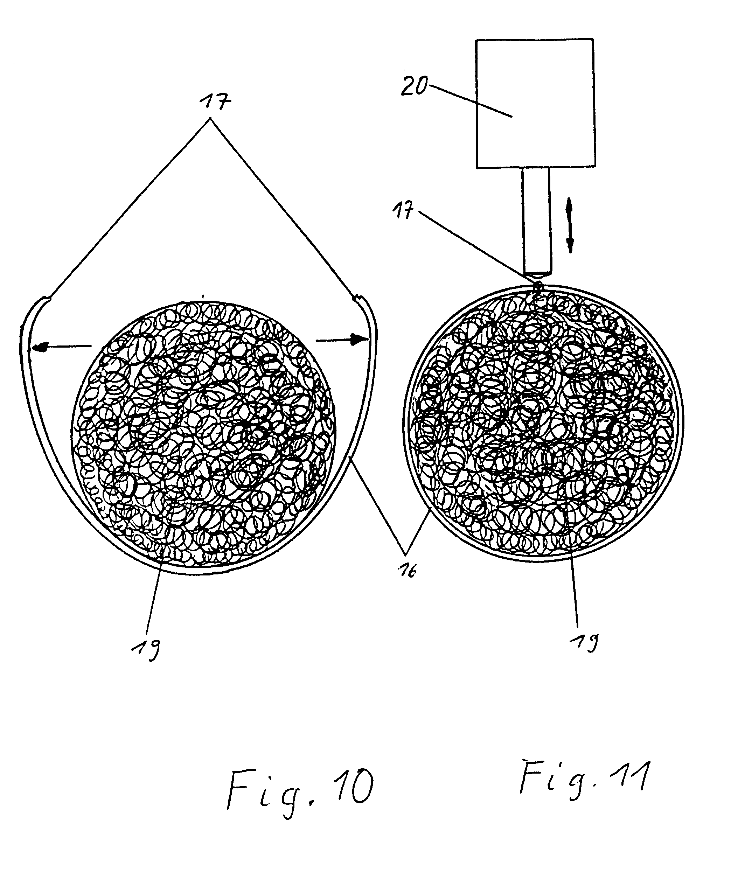

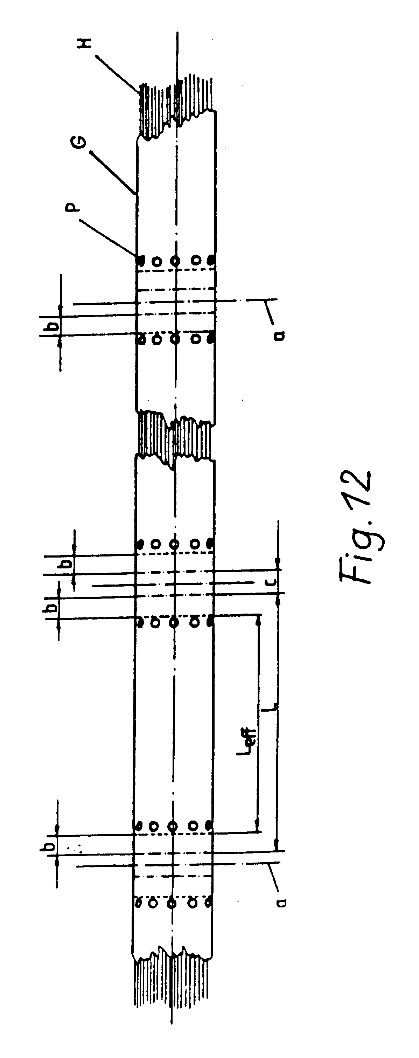

Aus den Figuren 9 bis 11 ist das Verfahren gemäß Anspruch 8 ersichtlich. 16 ist ein Rohr, welches längs der Linie 17 axial aufgetrennt ist. Die Öffnungen 18 dienen der Zu- bzw. Abfuhr von Austauschmedien. Das schematisch dargestellte Hohlfadenbündel 19 wird in das aufgebogene Rohr 16 eingelegt (Figur 10). Anschließend wird, wie in Figur 11 dargestellt, das Rohr 16 zusammengefügt und an der Trennlinie 17 verbunden, beispielsweise durch Kleben, Schweißen (20) oder zusätzlich angebrachte mechanische Hilfsmittel.

Über das verschlossene Rohr wird an beiden Enden je eine Abschlußkappe angebracht. Diese Abschlußkappe kann vorzugsweise Zu- bzw. Abführeinrichtungen für beide Austauschmedien, die um bzw. durch die Hohlfäden hindurchfließen sollen, enthalten.

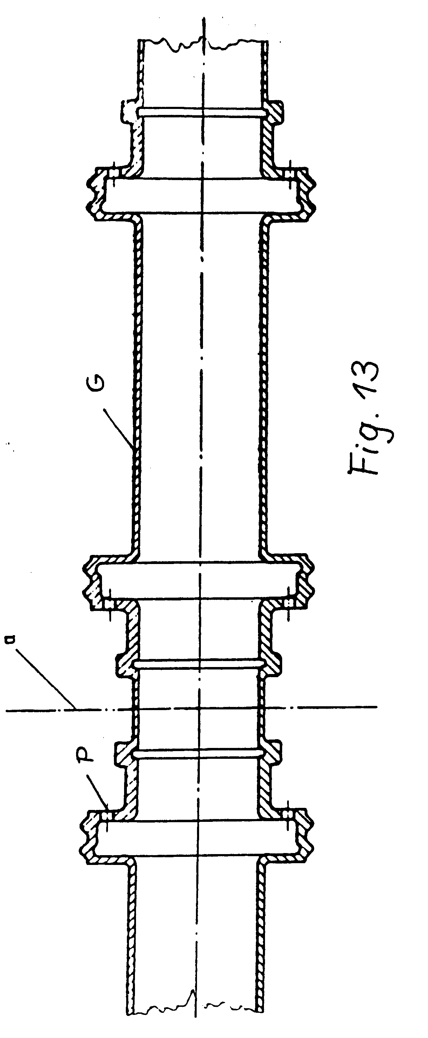

Aus Figur 12 ist das Wesentliche des Verfahrens nach Anspruch 9 dargestellt. In das die vielfache Länge des fertigen Austauschers aufweisende Mehrfachgehäuse G ist ein ebensolanges Hohlfadenbündel H eingeführt. Das Mehrfachgehäuse G weist an den als Gehäuseendabschnitten vorgesehenen Bereichen b Wanddurchbrüche P für die Zubzw. Abfuhr von Austauschmedien auf. In den Bereichen c wird das Mehrfachgehäuse G mit dem sich darin befindenden Hohlfadenbündel H zertrennt. Anschließend werden die Hohlfadenendabschnitte in den Bereichen zwischen den Trennstellen $\alpha$ und den Wanddurchbrüchen P mittels einer Vergußmasse abgedichtet. Danach werden durch Abtrennen eines scheibenförmigen Teils der Vergußmasse mit den darin eingegossenen Hohlfadenendabschnitten die Austauscher auf die gewünschte Länge L zugeschnitten und die nicht verschlossenen Hohlfadenenden freigelegt. Die den Stoff- und/oder Wärmeaustausch bewirkende effektive Länge der Hohlfäden beträgt $L_{eff}$. Auf diese Weise lassen sich aus einem Hohlfadenbündel mit einer Austauscheroberfläche von beispielsweise 0,5 bis 5 $m^2$ zwei bis dreißig aber auch mehr Austauscher auf sehr rationale Weise herstellen.

Das Mehrfachgehäuse G braucht jedoch nicht als im wesentlichen glatter Zylinder ausgebildet zu sein, sondern es kann wie in Figur 13 dargestellt auch in einer Blasformtechnik hergestellt worden sein und eine Außenkontur aufweisen, die beispielsweise das Aufsetzen der Kappen erleichtert und/oder bereits den am Außenmantel angeordneten Verteilerraum mit den Durchtrittsöffnungen P aufweist. Das Zertrennen des Mehrfachgehäuses G mit den sich darin befindenden Hohlfäden (nicht dargestellt), das anschließende Eingießen der Hohlfadenenden und das Freilegen der nichteingegossenen Hohlfadenenden erfolgt auch hierbei wie in der Beschreibung von Figur 12 beschrieben.

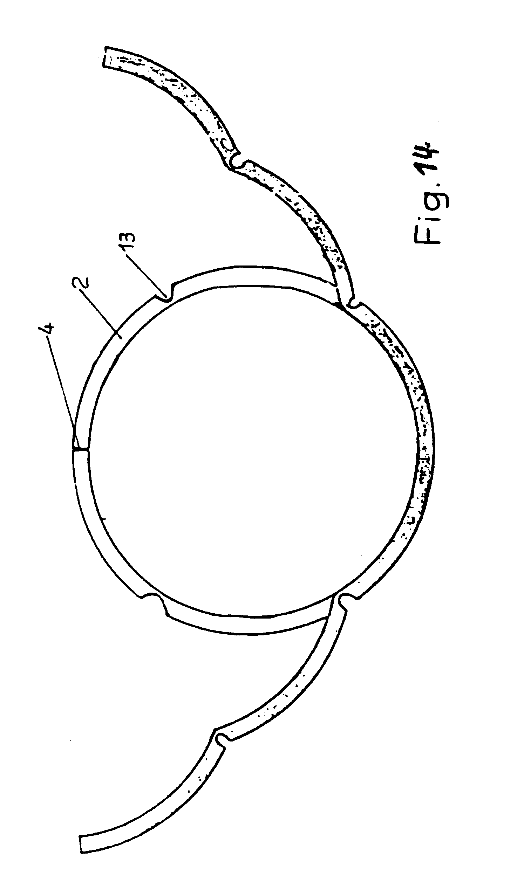

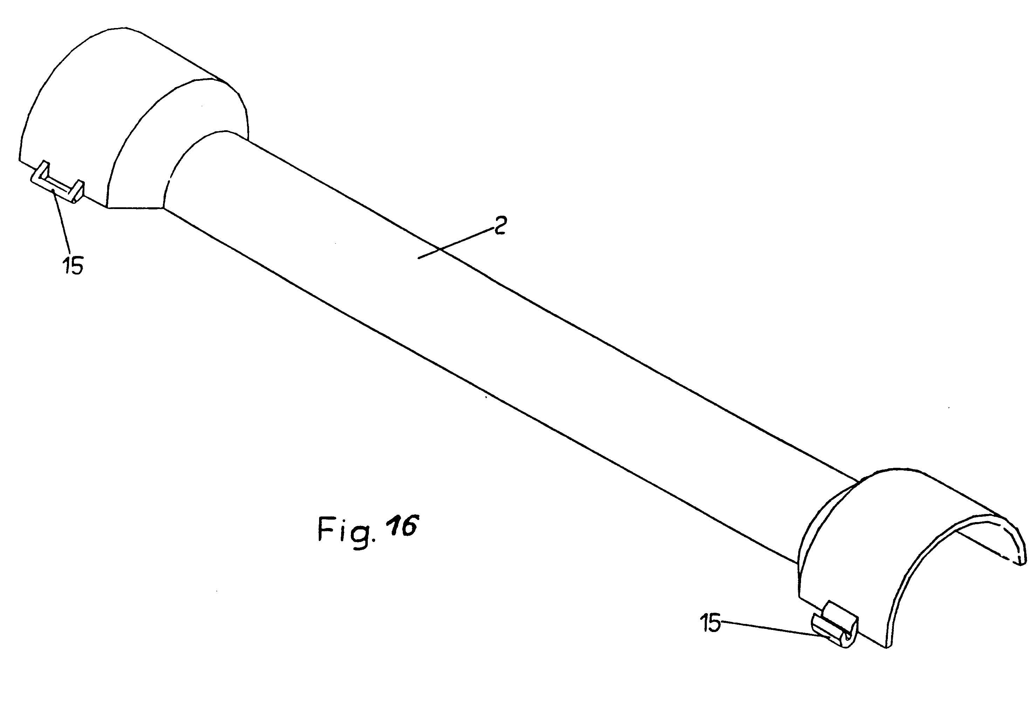

In Figur 14 ist ein aufklappbares rohrförmiges Gehäuse 2 sowohl im aufgeklappten wie im geschlossenen Zustand im Querschnitt dargestellt. Das Gehäuse 2 weist ingesamt vier in Längsrichtung über die gesamte Länge des Gehäuses 2 verlaufende nutenförmige Vertiefungen 13 auf. Hierdurch wird erreicht, daß die Wandstärke des Gehäuses 2 an diesen Stellen wesentlich geringer als in den übrigen Bereichen ist, so daß bei Verwendung eines nicht spröden Materials für das Gehäuse 2 an diesen Stellen eine reversible gegebenenfalls biegeelastische Verformung des Gehäuses 2 möglich ist, was das Auf- und Zuklappen desselben wesentlich vereinfacht. Im aufgeklappten Zustand können dann manuell oder maschinell die Hohlfäden eingelegt werden. Nach dem Einlegen der Hohlfäden kann das Gehäuse 2 dann wieder zugeklappt werden, wobei die Fuge 4 gebildet wird. Um zu vermeiden, daß das Gehäuse 2 nach dem Einlegen der Hohlfäden und dem Zusammenklappen wieder aufklafft, können kraft- oder formschlüssig arbeitende Verschlüsse vorgesehen werden, z.B. Klebeband.

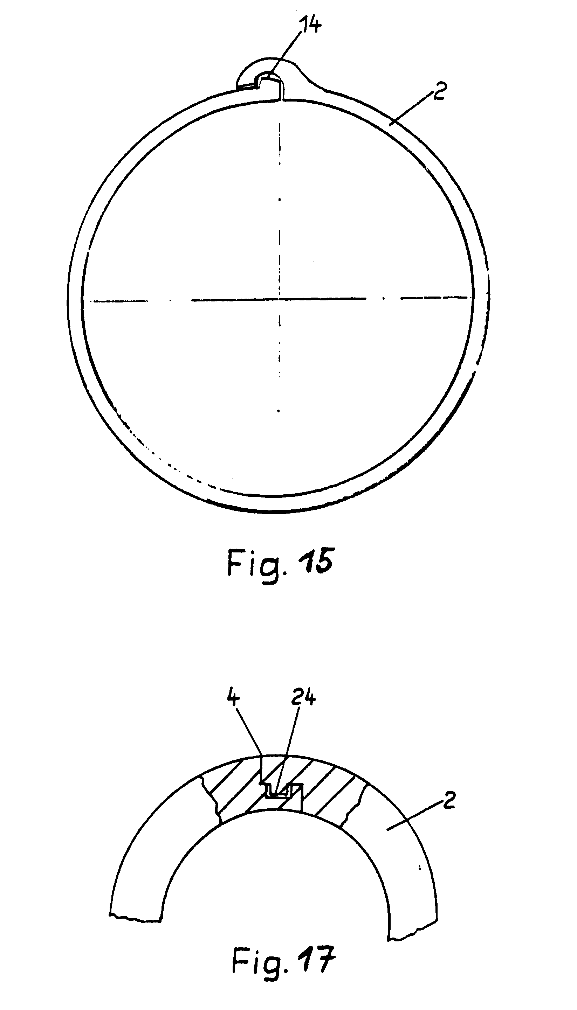

In Figur 15 ist ein solcher formschlüssig wirkender Schnappverschluß 14 dargestellt, dessen Funktionsweise sich für den Betrachter von selbst ergibt und deshalb nicht näher erläutert zu werden braucht. Der Schnappmechanismus 14 kann sich über die gesamte Länge oder aber nur über kurze Teilstrecken erstrecken.

In Figur 16 ist eine Hälfte eines Gehäuses 2 dargestellt, das durch Schnappscharniere 15 mit seiner anderen Hälfte aufklappbar verbunden werden kann. Im geschlossenen Zustand weist dieses Gehäuse 2 somit zwei Fugen auf.

Figur 17 zeigt im Querschnitt einen druckknopfähnlichen Verschluß 24 für ein aufklappbares Gehäuse 2. Dieser Verschluß hat den Vorteil, daß die äußere Kontur des Gehäuses 2 keine Veränderung aufweist, wie dies beispielsweise bei der Ausführungsform nach Figur 15 der Fall ist. Auch bei diesem Verschluß wird die Fuge 4 gebildet.

Das verschließen des aufklappbaren Gehäuses nach der Erfindung kann durch Kleben oder Schweißen erfolgen.

**Patentansprüche**

1. Stoff- und/oder Wärmeaustauscher, bestehend aus einem Bündel von Hohlfäden (4) von im wesentlichen gleicher Länge, deren Enden in eine Vergußmasse (3) eingebettet sind, einem im wesentlichen zylindrischen Gehäuse (2) mit Anschlußstutzen (5,6) zur Zu- und Abfuhr mindestens zweier Medien, wobei das erste Medium durch die Hohlfäden (4) hindurch, und das zweite Medium am Strömungseingang (10) des Gehäuses (2) radial nach innen, am Strömungsausgang (10) radial nach außen geführt wird, und wobei das Gehäuse (2) aus einem im wesentlichen rohrförmigen Körper (2) und zwei Kappen (1) besteht, die mit den Enden des im wesentlichen rohrförmigen Körpers (2) jeweils zwei voneinander dicht getrennte Verteilerräume (7,13) bilden, von denen der erste (13) stirnseitig und der zweite (7) am Außenmantel des rohrförmigen Körpers (2) angeordnet ist, und der Außenmantel des rohrförmigen Körpers (2) im Bereich des zweiten Verteilerraumes (7) mindestens eine Durchtrittsöffnung (10) aufweist, dadurch gekennzeichnet, daß alle Anschlußstutzen (5,6) in den Kappen (1) angeordnet sind.

2. Stoff- und/oder Wärmeaustauscher nach Anspruch 1, dadurch gekennzeichnet, daß der zweite Verteilerraum (7) ringförmig um den Außenmantel des rohrförmigen Körpers (2) angeordnet ist, und mehrere Durchtrittsöffnungen $(10' - 10^v)$ am Umfang des Außenmantels vorgesehen sind.

3. Stoff- und/oder Wärmeaustauscher nach Anspruch 1 oder 2, dadurch gekennzeichnet, daß die Innenwand der Enden des im wesentlichen rohrförmigen Körpers (2) im Bereich der Vergußmasse (3) eine derart erweiterte Querschnittsfläche aufweist, daß zwischen dem äußeren Umfang des Hohlfadenbündels (4) und der Innenwand des rohrförmigen Körpers (2) ein mit Vergußmasse (3) ausgefüllter, möglichst geringer Zwischenraum vorhanden ist.

4. Stoff- und/oder Wärmeaustauscher nach einem der Ansprüche 1 bis 3, dadurch gekennzeichnet, daß sich der Innenraum (18) des im wesentlichen rohrförmigen Körpers (2) vom einen Endbereich (21) zum anderen Endbereich (20) hin konisch erweitert (Fig.6).

5. Stoff- und/oder Wärmeaustauscher nach einem der Ansprüche 1 bis 4, dadurch gekennzeichnet, daß die Kappen (1) und der im wesentlichen rohrförmige Körper (2) aus unterschiedlichen Materialien besteht, und das Material des rohrförmigen Körpers (2) nahezu dasselbe Längenänderungsverhalten aufweist wie das Hohlfadenbündel (4).

6. Verwendung eines Stoffaustauschers nach einem der Ansprüche 1 bis 5 als Dialysator, dadurch gekennzeichnet, daß die beiden Kappen (1; 1'') stationär in einer Dialyseanlage eingebaut sind, wobei mindestens eine Kappe (1) axial bewegt und der rohrförmige Körper (2) mit dem Hohlfadenbündel (16) ausgetauscht werden kann (Fig. 7).

7. Verfahren zum Herstellen des Stoff- und/oder Wärmeaustauschers nach einem der Ansprüche 3 bis 5, bei dem ein Hohlfadenbündel (10) axial in ein Gehäuse (6) eingeführt und mittels einer Vergußmasse (12) an beiden Enden (7) abgedichtet wird, dadurch gekennzeichnet, daß ein rohrförmiges Gehäuse (6), dessen beide Enden (7) möglichst geringfügig erweitert sind, wobei auf die erweiterten Enden (7) des Gehäuses (6) je ein ringförmiger Körper (9) aufgebracht wird, der am freien Ende in seiner Innenabmessung der Außenkontur des Hohlfadenbündels (10) entspricht und von dieser Innenabmessung zunächst auf die Innenkontur des erweiterten Endes (7) des Gehäuses (6) übergeht, verwendet wird, daß die Enden des eingeführten Hohlfadenbündels (10) derart in eine Vergußmasse (12) dicht eingebettet werden, daß die Vergußmasse (12) den freien Raum (13) im ringförmigen Körper (9) und zumindest teilweise im erweiterten Gehäuseende (7) ausfüllt, daß nach dem Festwerden der Vergußmasse (12) der ringförmige Körper (9) entfernt wird und daß dann das überstehende, mit Vergußmasse (12) zusammengefaßte Hohlfadenbündelende außerhalb des Gehäuses (6) im Bereich, in dem der Außenquerschnitt der Vergußmasse (12) größer ist als der Außenquerschnitt des Hohlfadenbündels (10), abgeschnitten wird (Fig. 8).

8. Verfahren zum Herstellen des Stoff- und/oder Wärmeaustauschers nach einem der Ansprüche 1 bis 5, bei dem ein Hohlfadenbündel (19) radial in ein Gehäuse (16) eingeführt und mittels Vergußmasse an beiden Enden abgedichtet wird, dadurch gekennzeichnet, daß das Hohlfadenbündel (19) in ein flexibles, axial aufgetrenntes, aufgebogenes Rohr (16), das im Bereich des zweiten Verteilerraumes mindestens eine Durchtrittsöffnung (18) aufweist, eingelegt wird, das Rohr (16) in die gewünschte geschlossene Form gebracht und an der axialen Trennlinie (17) verbunden wird (Fig. 9 bis 11).

9. Verfahren zum Herstellen des Stoff- und/oder Wärmeaustauschers nach einem der Ansprüche 1 bis 5, bei welchem ein Hohlfadenbündel (H) axial in ein Gehäuse (G) eingeführt wird, dadurch gekennzeichnet, daß ein Hohlfadenbündel (H) mit einer zwei- bis vielfachen Länge des Hohlfadenbündels im fertigen Austauscher in ein ebensolanger Mehrfachgehäuse (G) eingeführt wird, das an den als Gehäuseendabschnitten vorgesehenen Bereichen (b) Wanddurchbrüche (P) für die Zu- bzw. Abfuhr von Austauschmedien aufweist, daß das Gehäuse (G) mit dem sich darin befindenden Hohlfadenbündel (H) zu Austauschern gewünschter Länge (L) zertrennt wird und daß die Hohlfadenendabschnitte anschließend in den Bereichen zwischen den Trennstellen (a) und den Wanddurchbrüchen (P) mittels einer Vergußmasse abgedichtet werden (Fig. 12).

**Claims**

1. Substance and/or heat exchanger consisting of a bundle of hollow threads (4) of substantially the same length, the ends of which are embedded in a sealing compound (3), and a substantially cylindrical housing (2) with connection pieces (5, 6) for the supply and removal of at least two media, the first medium being conveyed through the hollow threads (4), the second medium being conveyed radially inwards at the flow inlet (10) of the housing (2) and radially outwards at the flow outlet (10), the housing (2) consisting of a substantially tubular body (2) and two caps (1), which form with the ends of the substantially tubular body (2) two respective distributor spaces (7, 13) which are sealed off from one another, the first (13) of which is arranged at the front end and the second (7) at the outer surface of the tubular body (2), and the outer surface of the tubular body (2) comprising at least one through-opening (10) in the region of the second distributor space (7), characterised in that all the connection pieces (5, 6) are arranged in the caps (1).

2. Substance and/or heat exchanger according to claim 1, characterised in that the second distributor space (7) is arranged like a ring around the outer surface of the tubular body (2), and a plurality of through-openings (10$^I$ - 10$^V$) are provided at the circumference of the outer surface.

3. Substance and/or heat exchanger according to claim 1 or 2, characterised in that the inside wall of the ends of the substantially tubular body (2) has a cross-sectional area which is widened in the region of the sealing compound (3) such that the smallest possible space, which is filled with sealing compound (3), is disposed between the external circumference of the hollow thread bundle (4) and the inside wall of the tubular body (2).

4. Substance and/or heat exchanger according to one of claims 1 to 3, characterised in that the interior (18) of the substantially tubular body (2) widens in a conical manner from one end region (21) towards the other end region (20) (Figure 6).

5. Substance and/or heat exchanger according to one of claims 1 to 4, characterised in that the caps (1) and the substantially tubular body (2) consist of different materials, and the material of the tubular body (2) exhibits approximately the same length change behaviour as the hollow thread bundle (4).

6. Use of a substance exchanger according to one of claims 1 to 5 as a dialyser, characterised in that the two caps (1; 1") are mounted in a stationary manner in a dialysis apparatus, and at least one cap (1) can be moved axially and the tubular body (2) with the hollow thread bundle (16) can be replaced (Figure 7).

7. Method for producing the substance and/or heat exchanger according to one of claims 3 to 5, in which a hollow thread bundle (10) is inserted axially in a housing (6) and sealed at both ends (7) by means of a sealing compound (12), characterised in that a tubular housing (6) is used whose two ends (7) are widened as slightly as possible, a respective annular body (9) being mounted on the widened ends (7) of the housing (6), which body corresponds as regards its internal dimension at the free end to the external contour of the hollow thread bundle (10) and which initially changes from this internal dimension to the internal contour of the widened end (7) of the housing (6), that the ends of the inserted hollow thread bundle (10) are tightly embedded in a sealing compound (12) such that the sealing compound (12) fills the free space (13) in the annular body (9) and at least partly in the widened housing end (7), that the annular body (9) is removed after the sealing compound (12) has solidified, and that the projecting hollow thread bundle end, which is consolidated by sealing compound (12), is then cut off in the region in which the external cross section of the sealing compound (12) is greater than the external cross section of the hollow thread bundle (10) (Figure 8).

8. Method for producing the substance and/or heat exchanger according to one of claims 1 to 5, in which a hollow thread bundle (19) is inserted radially in a housing (16) and sealed at both ends by means of sealing compound, characterised in that the hollow thread bundle (19) is placed in a flexible, axially severed, bent-open tube (16), which comprises at least one through-opening (18) in the region of the second distributor space, the tube (16) is closed as desired and joined at the axial dividing line (17) (Figures 9 to 11).

9. Method for producing the substance and/or heat exchanger according to one of claims 1 to 5, in which a hollow thread bundle (H) is inserted axially in a housing (G), characterised in that a hollow thread bundle (H), which is two to four times as long as the hollow thread bundle in the finished exchanger, is inserted in a multiple housing (G) which is just as long and which comprises wall openings (P) for the supply or removal of exchange media at the regions (b) provided as housing end sections, that the housing (G) is divided with the hollow thread bundle (H) disposed therein into exchangers of the desired length (L), and that the hollow thread end sections are subsequently sealed in the regions between the dividing points (a) and the wall openings (P) by means of a sealing compound (Figure 12).

**Revendications**

1. Echangeur de substances et/ou de chaleur, constitué par un faisceau de fibres creuses (4) ayant sensiblement même longueur, dont les extrémités sont noyées dans une masse de remplissage (3), par une enceinte sensiblement cylindrique (2) avec des tubulures de raccordement (5, 6) pour l'arrivée et le départ d'au moins deux fluides, le premier fluide passant par les fibres creuses (4) et le deuxième fluide circulant radialement vers l'intérieur, à l'entrée d'écoulement (10) que comporte l'enceinte (2), et radialement vers l'extérieur à la sortie d'écoulement (10), l'enceinte (2) étant constituée par un corps sensiblement tubulaire (2) et par deux coiffes (1), lesquelles forment à chaque fois avec les extrémités du corps sensiblement tubulaire (2) deux volumes répartiteurs (7, 13) séparés l'un de l'autre de manière étanche, le premier (13) étant situé frontalement et le deuxième sur la surface périphérique extérieure du corps tubulaire (2), ladite surface périphérique extérieure du corps tubulaire (2) présentant au moins une ouverture de passage (10) dans la région du deuxième volume répartiteur (7), caractérisé par le fait que toutes les tubulures de raccordement (5,6) sont agencées dans les coiffes (1).

2. Echangeur de substances et/ou de chaleur selon revendication 1, caractérisé par le fait que le deuxième volume répartiteur (7) est disposé annulairement autour de la surface périphérique extérieure du corps tubulaire (2), et plusieurs ouvertures de passage (10' - 10$^V$) sont prévues sur le pourtour de la surface périphérique extérieure.

3. Echangeur de substances et/ou de chaleur selon revendication 1 ou 2, caractérisé par le fait que la paroi intérieure des extrémités du corps sensiblement tubulaire (2) présente, dans la région de la masse de remplissage (3), une surface de section droite élargie de manière qu'il y ait un volume intermédiaire aussi faible que possible, rempli de masse de remplissage (3), entre le pourtour extérieur du faisceau de fibres creuses (4) et la paroi intérieure du corps tubulaire (2).

4. Echangeur de substances et/ou de chaleur selon l'une des revendications 1 à 3, caractérisé par le fait que le volume intérieur (18) du corps sensiblement tubulaire (2) s'élargit en cône d'une région extrême (21) à l'autre région extrême (20) (figure 6).

5. Echangeur de substances et/ou de chaleur selon l'une des revendications 1 à 4, caractérisé par le fait que les coiffes (1) et le corps sensiblement tubulaire (2) sont en matériaux différents, le matériau du corps tubulaire (2) présentant sensiblement le même comportement que le faisceau de fibres creuses (4) pour ce qui est des variations de longueur.

6. Utilisation d'un échangeur de substances selon l'une des revendications 1 à 5 en tant que dialyseur, caractérisée par le fait que les deux coiffes (1; 1'') sont montées fixes dans une installation de dialyse, au moins une coiffe (1) pouvant être déplacée axialement et le corps tubulaire (2) pouvant être remplacé avec le faisceau de fibres creuses (16) (figure 7).

7. Procédé de fabrication de l'échangeur de substances et/ou de chaleur selon l'une des revendications 3 à 5, dans lequel un faisceau de fibres creuses (10) est introduit axialement dans une enceinte (6) et le scellement étanche est réalisé aux deux extrémités (7), au moyen d'une masse de remplissage (12), caractérisé par le fait que l'on utilise une enceinte tubulaire (6) dont les deux extrémités (7) sont élargies aussi faiblement que possible, un corps annulaire (9) étant appliqué sur chacune des extrémités élargies (7) de l'enceinte (6), lequel corps, à l'endroit de l'extrémité libre, correspond par sa dimension intérieure au contour extérieur du faisceau de fibres creuses (10) et, partant de cette dimension intérieure,se raccorde d'abord au contour intérieur de l'extrémité élargie (7) de l'enceinte (6), par le fait que les extrémités du faisceau de fibres creuses introduit sont noyées de manière étanche dans une masse de remplissage (12), par le fait que la masse de remplissage (12) remplit le volume libre (13) dans le corps annulaire (9) et au moins partiellement dans l'extrémité élargie (7) de l'enceinte, par le fait que le corps annulaire (9) est enlevé après solidification de la masse de remplissage (12), et par le fait que l'extrémité débordante du faisceau de fibres agglomérée avec la masse de remplissage (12) est coupée à l'extérieur de l'enceinte (6), dans la région dans laquelle la section droite extérieure de ladite masse de remplissage (12) est plus grande que la section droite extérieure du faisceau de fibres creuses (10) (figure 8).

8. Procédé de fabrication de l'échangeur de substances et/ou de chaleur selon l'une des revendications 1 à 5, dans lequel un faisceau de fibres creuses (19) est introduit radialement dans une enceinte (16) et, au moyen d'une masse de remplissage, est scellé avec étanchéité aux deux extrémités, caractérisé par le fait que le faisceau de fibres creuses (19) est posé dans un tube flexible (16) fendu axialement et ouvert par déformation, lequel présente au moins une ouverture de passage (18) dans la région du deuxième volume répartiteur, puis ledit tube (16) est amené à la forme fermée désirée et est refermé par assemblage des bords de la fente axiale (17) (figures 9 à 11).

9. Procédé de fabrication de l'échangeur de substances et/ou de chaleur selon l'une des revendications 1 à 5, dans lequel un faisceau de fibres creuses (H) est introduit axialement dans une enceinte (G), caractérisé par le fait qu'un faisceau de fibres creuses (H), ayant de deux à plusieurs fois la longueur du faisceau de fibres creuses dans l'échangeur fini, est introduit dans une enceinte multiple (G) de même longueur, laquelle présente, dans les régions (b) prévues pour constituer des portions terminales de l'enceinte, des passages (P), respectivement pour l'arrivée et le départ de fluides d'échange, par le fait que l'enceinte (G) avec le faisceau de fibres creuses (H) monté dans celle-ci est coupée à la longueur (L) désirée pour les échangeurs, et par le fait que les portions terminales des fibres creuses sont ensuite scellées dans les région entre les coupes (a) et les passages (P) au moyen d'une masse de remplissage (figure 12).

Fig. 1

Fig. 2

Fig. 3

Fig. 4

Fig. 5

Fig. 6

*Blut*

*22*

*28*

*25*

*27*

*1*

*Dialysat*

*26*

*2*

*2*

*16*

*Dialysat*

*1"*

*24*

*29*

*23*

*Fig. 7*

*Blut*

17

Fig. 8

Fig. 9

Fig. 10

Fig. 11

Fig.12

EP 0 200 158 B1

Fig. 13

Fig. 14

Fig. 16

EP 0 200 158 B1

Fig. 15

Fig. 17